# EUROPÄISCHE PATENTSCHRIFT

(11) **EP 0 920 257 B1**
(45) Veröffentlichungstag und Bekanntmachung des Hinweises auf die Patenterteilung: **12.06.2002**
(21) Anmeldenummer: 97931769.0
(22) Anmeldetag: 04.07.1997
(51) Int. Cl.: A22C 13/00

(54) **CELLULOSEHYDRAT-FORMKÖRPER MIT ENZYMATISCH MODIFIZIERTER OBERFLÄCHE**
MOULDED ARTICLES OF CELLULOSE HYDRATE WITH ENZYMATICALLY MODIFIED SURFACE
ARTICLES MOULES EN HYDRATE DE CELLULOSE A SURFACE MODIFIEE PAR VOIE ENZYMATIQUE

(30) Priorität: 15.07.1996 DE 19628232
(43) Veröffentlichungstag der Anmeldung: 09.06.1999
(73) Patentinhaber: Kalle Nalo GmbH & Co. KG, 65203 Wiesbaden (DE)
(72) Erfinder: HAMMER, Klaus, Dieter, D-55120 Mainz (DE); KÖNIG, Martina, D-65207 Wiesbaden (DE); KRAMS, Theo, D-65197 Wiesbaden (DE)
(74) Vertreter: Zounek, Nikolai, Dipl.-Ing.
(86) Internationale Anmeldenummer: EP9703530
(87) Internationale Veröffentlichungsnummer: WO9802046

(56) Entgegenhaltungen:
- EP-A- 0 634 101
- EP-A- 0 718 406
- WO-A-89/10381
- DE-A- 4 439 149
- FR-A- 1 546 629
- GB-A- 1 110 503
- US-A- 5 175 275

## Beschreibung

Die Erfindung betrifft Formkörper auf der Basis von Cellulosehydrat sowie ein Verfahren zur Behandlung der Oberfläche von solchen Formkörpern. Die schlauchförmigen Formkörper sind besonders geeignet als Nahrungsmittelhüllen, speziell als Wursthüllen.

Die Herstellung von Cellulosehydrat-Formkörpern nach dem Viskoseverfahren ist seit langem bekannt. In diesem Verfahren wird eine wäßrige Cellulosexanthogenat- Lösung in ein saures Fällbad extrudiert. Dort wird sie zu Cellulosehydrat regeneriert. Dabei liegt das Cellulosehydrat zunächst im Gelzustand vor. Einen nahtlosen, schlauchförmigen Formkörper erhält man, wenn man die Viskoselösung durch eine Ringdüse extrudiert. Cellulosehydrat-Formkörper lassen sich auch nach anderen Verfahren herstellen, z. B. nach dem (technisch überholten) Kupferoxidammoniak- oder dem Aminoxid-Verfahren unter Verwendung von N-Methyl-morpholin-N-oxid (DE-A 196 07 953).

Die so hergestellten, schlauchförmigen Wursthüllen auf Cellulosehydratbasis werden häufig entsprechend dem vorgesehenen Verwendungszweck auf der Innen- und/oder Außenseite mit verschiedenen Präparationen behandelt. So haftet Blutwurst sehr stark an der Cellulosehydrathülle. Um die Hülle dennoch leicht abziehen zu können ohne dabei die Brätoberfläche aufzureißen, ist sie auf der Innenseite mit einer Trennpräparation versehen. Eine geeignete Trennpräparation enthält beispielsweise eine Chrom-Fettsäure-Komplexverbindung und ein Dialkylpolysiloxan. Dauerwurstbrät hat dagegen die Neigung, sich mit der Zeit von der Cellulosehülle zu lösen. Die Haftung zwischen Brät und Hülle wird daher mit einer entsprechenden Innenpräparation erhöht. Die Haftpräparation enthält auch ein wasserunlösliches, gehärtetes, kationisches Harz und ein Öl. Das ÖI kann dabei ein pflanzliches ÖI, ein Triglyceridgemisch pflanzlicher Fettsäuren, ein Paraffinöl oder ein Silikonöl sein. Andere Präparationen dienen dazu, die Cellulosehülle gegen Schimmelbefall resistent zu machen. Als fungicide Mittel werden beispielsweise Di-n-decyl-dimethyl-ammoniumsalze eingesetzt. Wieder andere Präparationen enthalten ein Harz sowie Partikel oder Fasern aus Kunststoff oder Cellulose. Sie schaffen eine rauhe Oberfläche.

Innen- bzw. Außenpräparationen werden allgemein auf den Cellulose-Gelschlauch aufgebracht. Der Auftrag ist dabei allerdings nicht immer gleichmäßig. Er ist abhängig vom Quellungsgrad und vom Wassergehalt des Cellulosehydrat-Gelschlauches, ferner von der Art der zum Auftragen eingesetzten Vorrichtung. Die vor dem Trockner angeordneten Quetschwalzen können zudem Falten verursachen. Allgemein gilt, daß der Auftrag ungleichmäßiger wird, je glatter die Oberfläche ist. Bei den faserverstärkten Hüllen wird die Oberfläche glatter, wenn mehr Viskoselösung aufgetragen wurde. Die Oberfläche von solchen glatten Wursthüllen muß mit einer entsprechenden Außenpräparation aufgerauht werden, damit die Hülle nach dem Wässern auch mit fettigen Händen auf das Füllrohr geschoben werden kann. Ein ungleichmäßiger, streifiger Auftrag der Außenpräparation würde die Handhabung erschweren.

Es bestand daher die Aufgabe, ein Verfahren zur Verfügung zu stellen, mit dem sich die Oberfläche von Cellulosehydrat-Formkörpern je nach Wunsch mehr oder weniger stark aufrauhen läßt, so daß eine Außenpräparation zur Erhöhung der Rauhigkeit nicht mehr erforderlich ist. Zudem sollen sich die gebräuchlichen Innen- bzw. Außenpräparationen auf der Oberfläche gleichmäßiger verteilen und besser haften.

Gelöst wird die Aufgabe dadurch, daß der flächen- oder schlauchförmige Cellulosehydrat-Formkörper, bevorzugt im Gelzustand, über eine definierte Zeitspanne mit einer Cellulase behandelt wird. Unter "flächenförmigem Formkörper" ist allgemein eine Flachfolie zu verstehen.

Gegenstand der vorliegenden Erfindung ist somit ein Verfahren zur Behandlung von flächen- oder schlauchförmigen Cellulosehydrat-Formkörpern, insbesondere von Nahrungsmittelhüllen, das dadurch gekennzeichnet ist, daß man auf die Oberfläche mindestens eine Cellulase einwirken läßt und sie anschließend dauerhaft inaktiviert.

Teil der vorliegenden Erfindung sind auch flächen- oder schlauchförmige Formkörper, insbesondere Nahrungsmittelhüllen, auf der Basis von Cellulosehydrat, deren Oberfläche durch zeitlich begrenzte Einwirkung mindestens einer Cellulase modifiziert ist. Sie können nach einem beliebigen Verfahren hergestellt sein, vorzugsweise jedoch nach dem Viskose- oder dem Aminoxidverfahren.

Es gibt Cellulasen, die in leicht saurer Umgebung (pH 4,5 bis 5,5) ihre höchste Aktivität zeigen, und solche, die in praktisch neutraler Umgebung (pH 6 bis 7) besonders aktiv sind. Beide Arten von Cellulasen sind in dem vorliegenden Verfahren verwendbar. Sie werden gewöhnlich aus Aspergillus- oder Trichoderma-Arten hergestellt. Die Cellulase sollte dementsprechend bei einem pH-Wert im Bereich von 4,0 bis 7,5, bevorzugt von 4,5 bis 7,0, auf den Formkörper einwirken. Durch Erhöhen des pH-Wertes auf mehr als 8 werden die Cellulasen auf Dauer inaktiviert. Der gleiche Effekt wird erzielt, wenn die Temperatur auf mehr als 70 °C steigt. Eine Temperatur von mehr als 70 °C wird normalerweise während des im Viskose- oder Aminoxidverfahren üblichen Trocknungsschritts erreicht. Ein zusätzliches Erhitzen des Cellulose-Formkörpers ist daher in der Regel nicht erforderlich.

Allgemein läßt man die Cellulase 20 s bis 40 min lang, bevorzugt 2 min bis 20 min lang, auf die Cellulosehydrat-Formkörper einwirken. Die Oberflächenrauhigkeit steigt mit der Dauer der Einwirkung. Die Temperatur beträgt dabei 50 bis 68 °C, bevorzugt bis 60 °C. Bei dieser Temperatur entwickelt das Enzym seine höchste Aktivität. Unterhalb von 50 °C ist der durch die Cellulase bewirkte Abbauprozeß verlangsamt, die Einwirkzeit muß dann entsprechend länger sein. Es hat sich als günstig erwiesen, wäßrige Lösungen mit einem Anteil von 0,2 bis 20 Gew.-%, bevorzugt 0,5 bis 5 Gew.-%, an Cellulase, bezogen auf das Gesamtgewicht der Lösung, einzusetzen.

Schlauchförmige Cellulosehydrat-Formkörper können auf der Innen- und/oder Außenseite mit der Enzymlösung behandelt werden. Durch entsprechende Einstellung der Cellulasekonzentration im Innen- bzw. Außenbad ist es auch möglich, innen eine andere Rauhigkeit als außen zu erzielen. Die enzymbehandelten Formkörper sind an einer mehr oder weniger matten Oberfläche erkennbar. Das erfindungsgemäße Verfahren ist auf reine, d.h. nicht faserverstärkte, Cellulosehydrathüllen anwendbar, ebenso gut aber auch auf faserverstärkte. Die faserverstärkten Hüllen werden durch Aufbringen der Viskoselösung auf die Faserverstärkung von außen, von innen oder von beiden Seiten hergestellt. Die so produzierten Hüllen werden demgemäß als außenviskosierte, innenviskosierte oder doppelviskosierte Hüllen bezeichnet. Die Faserverstärkung besteht üblicherweise aus einem Hanffaservlies. Die nicht-faserverstärkten, cellulasebehandelten Hüllen zeigen in der Regel ein opakes Erscheinungsbild.

Die Viskoselösung kann noch verschiedene Zusätze, wie Alginat, enthalten. Der Anteil dieser Zusätze kann bis zu 30 Gew.-%, bezogen auf das Gesamtgewicht der Viskoselösung, betragen. Damit lassen sich die Eigenschaften der Formkörper, insbesondere die mechanischen Eigenschaften, weiter modifizieren.

Cellulytisch wirksame Enzyme sind allgemein in der Fleischwarenbranche gefürchtet, und es wurde alles getan, um ihr Auftreten zu vermeiden. Sie können bei der Dauerwurstreifung unter ungünstigen klimatischen Bedingungen von bestimmten Schimmelpilzen und Hefen gebildet werden und eine starke Schädigung oder gar Zerstörung von Cellulosehydrathüllen bewirken. Das gilt selbst für faserverstärkte Hüllen. Geschädigte Hüllen lassen sich nur sehr schwer und auch nur in Fetzen vom Wurstbrät entfernen.

Aufgrund der obengenannten Wirkung waren solche Enzyme bei der Herstellung von Nahrungsmittelhüllen, insbesondere Wursthüllen, ausgeschlossen. Auf der Suche nach Alternativen für die rauhe Oberflächenpreparation bei Faserhüllen und die Mattierung bei reinen Cellulosehydrathüllen, reifte der Entschluß, die zerstörerischen Eigenschaften von Enzymen gezielt und gesteuert einzusetzen, um spezifische Oberflächeneffekte zu erreichen.

Die Enzymbehandlung kann in verschiedenen Phasen des Viskose- oder Aminoxidverfahrens integriert werden. Sie können auf die Celluloseformkörper einwirken, während sich diese noch im Gelzustand befinden. Die nach dem Viskoseverfahren hergestellten Hüllen haben einen Quellwert von etwa 200 bis 220%, während die nach dem Aminoxidverfahren hergestellten einen Quellwert bis zu 320% aufweisen. Dann können die Enzyme auch tiefere Zonen erreichen. Innerhalb kürzerer Zeit und/oder bei geringerer Enzymkonzentration (bis 3 Gew.-% an Cellulase, bezogen auf das Gesamtgewicht der enzymhaltigen Lösung) lassen sich bereits deutliche Aufrauheffekte erreichen. In diese Phase läßt sich die Cellulasebehandlung am besten und vor allem ohne großen technischen Aufwand integrieren. Die Enzymbehandlung kann auch mit einer sekundären Weichmachung kombiniert werden. Der sekundäre Weichmacher ist in erster Linie Glycerin.

Es ist jedoch auch möglich, die bereits getrockneten Cellulosehydratformkörper durch das Enzymbad zu führen oder sie mit der Enzymlösung zu besprühen. Nach dem Trocknen ist der Quellwert bei den nach dem Viskoseverfahren hergestellten Hüllen auf etwa 130 bis 140% gesunken und bei den nach dem Aminoxidverfahren hergestellten auf etwa 180%. Das Cellulosehydrat hat eine dichtere Struktur angenommen. Ein nachfolgender cellulytischer Abbau findet daher überwiegend an der Oberfläche statt, weniger in der Tiefe.

Das durch Hitze und/oder Alkali inaktivierte Enzym läßt sich gleichzeitig als Haftimprägnierung nutzen. Wie andere Proteine auch, kann es mit üblichen Härtungs- oder Vernetzungsmittels an die Cellulose gebunden werden.

Die nach dem erfindungsgemäßen Verfahren hergestellten, schlauchförmigen Nahrungsmittelhüllen zeigen den weiteren Vorteil, daß sich die eingangs beschriebenen Innen- oder Außenpräparationen wesentlich besser und gleichmäßiger aufbringen lassen. Es bleibt mehr davon haften, so daß sich mit geringeren Auftragsmengen deutlich bessere Effekte erzielen lassen. Aufgrund der aufgerauhten Oberflächenstruktur lassen sich die Hüllen besser bedrucken. Dies ist besonders für Wursthüllen von Bedeutung, die im Flexodruckverfahren bedruckt werden. Auch lange Abschnitte der erfindungsgemäßen Hüllen lassen sich in gewässertem Zustand leicht auf das Füllrohr schieben, ohne daß eine zusätzliche Beschichtung zur Erhöhung der Rauhigkeit erforderlich wäre. Schließlich wird auch das abschnittsweise Raffen (= Aufstocken) der schlauchförmigen Hülle erleichtert.

Die folgenden Beispiele sollen die Erfindung erläutern, ohne sie in irgendeiner Weise zu beschränken.

### Beispiel 1:

Ein außenviskosierter Cellulosehydratschlauch vom Kaliber 48 (= 48 mm Durchmesser) wurde im Gelzustand durch eine Weichmacherkufe gefahren, die pro Liter 100 g Glycerin, 25 g Cellulase (®Cellusoft L der Novo Nordisk A/S, Bagsvaerd, Dänemark) und zum Rest Wasser enthielt, einen pH-Wert von 6 bis 7 und eine Temperatur von 50 bis 60 °C aufwies. Die Verweildauer in dieser Kufe betrug 10 min. Danach wurde das an der Oberfläche haftende Wasser abgestreift. Innen wurde die schlauchförmige Hülle anschließend mit einer üblichen Haftimprägnierung versehen. Der Schlauch wurde dann mit Luft ("Stützluft") auf das Kaliber aufgeblasen und mit Heißluft bis zu einer Restfeuchte von 8 bis 10 Gew.-%, bezogen auf das Gesamtgewicht, getrocknet. Die äußere Oberfläche war rauh und matt. In den mechanischen Eigenschaften, insbesondere in der Festigkeit, ließ sich kein Unterschied zu den nicht enzymbehandelten Hüllen feststellen. Durch die rauhe Oberfläche ließen sich die gewässerten Hüllenabschnitte leicht voneinander trennen und auf das Füllrohr aufziehen. Der Füllvorgang selbst, der Reifeverlauf und die Schälbarkeit entsprachen einer nicht-enzymbehandelten Hülle.

### Beispiel 2:

Ein doppelviskosierter, faserverstärkter Cellulosehydratgelschlauch vom Kaliber 60, bei dem 40 % der Viskoselösung von außen und 60 % Viskoselösung von innen auf das Faservlies aufgebracht waren, wurde innen und außen mit einer Lösung behandelt, die pro Liter 100 g Glycerin, 30 g ®Cellusoft L und zum Rest Wasser enthielt. Der pH-Wert der Lösung lag bei 6 bis 7, seine Temperatur bei 50 bis 60 °C. Die Behandlungsdauer betrug 20 min. Durch Abquetschen mit Hilfe eines Walzenpaares wurde der Schlauch von den anhaftenden Resten der Lösung befreit und anschließend in einem Behälter abgelegt. Vor dem Einlauf in den Trockner wurde der Schlauch schließlich noch mit einer 2 gew.-%igen wäßrigen Glyoxallösung imprägniert. Auf diese Weise wurde das Enzym-Protein fest an die Celluloseoberfläche gebunden und ergab so eine Haftimprägnierung. Der Schlauch wurde dann im aufgeblasenen Zustand bei mehr als 70 °C getrocknet bis die Restfeuchte bei 8 bis 10 Gew.-% lag. Er war rauh und opak.

Lange, gewässerte Abschnitte ließen sich mühelos auf das Füllrohr aufschieben. Gefüllt wurde die Hülle dann mit Dauerwurstbrät. Auch nach langer Reifedauer haftete die Hülle noch ausreichend und gleichmäßig an dem Brät. Nach beendetem Reifeprozeß ließen sich die Hüllen problemlos abziehen. Die Schälbarkeit wurde mit "2,5" beurteilt (subjektive Skala von 1 bis 6; 1 = läßt sich sehr leicht abziehen, 6 = läßt sich nur unter Zerstörung der Hülle oder unter Aufreißen der Brätoberfläche abziehen).

### Beispiel 3:

Ein Cellulosehydrat-Gelschlauch vom Kaliber 40 wurde durch eine Weichmacherkufe gefahren, die pro Liter 100 g Glycerin, 15 g ®Cellusoft L und zum Rest Wasser enthielt. Der pH-Wert lag wiederum bei 6 bis 7, die Temperatur dagegen bei 60 bis 65 °C. Die Einwirkungsdauer war auf 5 min verkürzt. Überschüssige Behandlungslösung wurde wie beschrieben abgequetscht. Dann wurde die Hülle mit Luft auf Kaliber aufgeblasen und mit Heißluft bis zu einer Restfeuchte von 8 bis 10 Gew.-% getrocknet. Anschließend wurde die Hülle abschnittsweise zu Raupen gerafft, wobei der Feuchtegehalt auf 14 bis 16 Gew.-% erhöht wurde. Die äußere Oberfläche war rauh und matt. Durch die Enzymbehandlung hatte sich das Verhalten der Hülle beim Füllen deutlich verbessert. Das Füllkaliber schwankt weniger stark als bei nicht-enzymbehandelten Hüllen. Die übrigen mechanischen Eigenschaften bewegten sich im üblichen Bereich.

### Beispiel 4:

Ein braun eingefärbter Cellulosehydrat-Gelschlauch vom Kaliber 38 wurde durch eine Weichmacherkufe gefahren, die pro Liter 100 g Glycerin, 20 g ®Cellusoft L und zum Rest Wasser enthielt. pH-Wert und Temperatur der Behandlungslösung waren wie im Beispiel 3 angegeben. Die Verweilzeit des Schlauches in der Kufe betrug 2 min. Überschüssige Lösung wurde wiederum abgequetscht. Beim anschließenden Trocknen mit Heißluft wurde der Schlauch spiralig über eine Walze geführt und so in eine Kranzform gebracht. Die Oberfläche der fertigen Hülle war rauh und matt. Die mechanischen Eigenschaften des Schlauchs waren nicht beeinträchtigt.

## Patentansprüche

1. Verfahren zur Behandlung von flächen- oder schlauchförmigen Cellulosehydrat-Formkörpern, **dadurch gekennzeichnet, daß** man mindestens eine Cellulase auf die Oberfläche einwirken läßt und sie anschließend dauerhaft inaktiviert.

2. Verfahren gemäß Anspruch 1, **dadurch gekennzeichnet, daß** man die Cellulase bei einem pH-Wert im Bereich von 4,0 bis 7,5, bevorzugt 4,5 bis 7,0, einwirken läßt.

3. Verfahren gemäß Anspruch 1, **dadurch gekennzeichnet, daß** man die Cellulase durch Erhöhen des pH-Wertes auf mehr als 8 und/oder Erhöhen der Temperatur auf mehr als 70 °C inaktiviert.

4. Verfahren gemäß Anspruch 1, **dadurch gekennzeichnet, daß** man die Cellulase bei einer Temperatur von 50 bis 68 °C, bevorzugt bis 60 °C, 20 s bis 40 min lang, bevorzugt 2 min bis 20 min lang, einwirken läßt.

5. Verfahren gemäß Anspruch 1, **dadurch gekennzeichnet, daß** man die Cellulase in Form einer wäßrigen Lösung mit einem Anteil von 0,2 bis 20 Gew.-%, bevorzugt 0,5 bis 5 Gew.-%, an Cellulase, bezogen auf das Gesamtgewicht der Lösung, einsetzt.

6. Flächen- oder schlauchförmiger Formkörper auf der Basis von Cellulosehydrat, **dadurch gekennzeichnet, daß** seine Oberfläche durch zeitlich begrenzte Einwirkung mindestens einer Cellulase modifiziert ist.

7. Formkörper gemäß Anspruch 6, **dadurch gekennzeichnet,daß** er nach dem Viskose- oder Aminoxidverfahren hergestellt ist und die Cellulase eingewirkt hat, während sich die Cellulose noch im Gelzustand befand.

8. Formkörper gemäß Anspruch 6, **dadurch gekennzeichnet, daß** er nach dem Viskose- oder Aminoxidverfahren hergestellt ist und die Cellulase eingewirkt hat, nachdem die Cellulose regeneriert und getrocknet war.

9. Schlauchförmiger Formkörper gemäß Anspruch 6, **dadurch gekennzeichnet, daß** er auf der Innen- und/oder Außenseite durch Einwirkung der Cellulase modifiziert ist.

10. Schlauchförmiger Formkörper gemäß Anspruch 9, **dadurch gekennzeichnet, daß** er anschließend mit einer fungiciden Lösung und/oder einer Trenn- oder Haftpräparation beaufschlagt wurde.

11. Schlauchförmiger Formkörper gemäß Anspruch 9 oder 10, **dadurch gekennzeichnet, daß** er mit einem Faservlies, bevorzugt aus Hanffasern, verstärkt ist.

12. Verwendung des schlauchförmigen Formkörpers gemäß einem oder mehreren der Ansprüche 9 bis 11 als Nahrungsmittelhülle, bevorzugt als Wursthülle.

## Claims

1. A process for the treatment of flat or tubular hydrated cellulose shaped articles, which comprises allowing at least one cellulase to act on the surface and then inactivating this cellulase permanently.

2. The process as claimed in claim 1, wherein the cellulase is allowed to act at a pH in the range from 4.0 to 7.5, preferably 4.5 to 7.0.

3. The process as claimed in claim 1, wherein the cellulase is inactivated by increasing the pH to more than 8 and/or increasing the temperature to more than 70°C.

4. The process as claimed in claim 1, wherein the cellulase is allowed to act at a temperature of 50 to 68°C, preferably up to 60°C, for 20 seconds to 40 minutes, preferably 2 minutes to 20 minutes.

5. The process as claimed in claim 1, wherein the cellulase is employed in the form of an aqueous solution with a content of 0.2 to 20% by weight, preferably 0.5 to 5% by weight, of cellulase, based on the total weight of the solution.

6. A flat or tubular shaped article based on hydrated cellulose, the surface of which is modified by the time-limited action of at least one cellulase.

7. The shaped article as claimed in claim 6, which is produced by the viscose or amine oxide process and on which the cellulase has acted while the cellulose was still in the gel state.

8. The shaped article as claimed in claim 6, which is produced by the viscose or amine oxide process and on which the cellulase has acted after the cellulose has been regenerated and dried.

9. The tubular shaped article as claimed in claim 6, which is modified by the action of the cellulase on the inside and/or outside.

10. The tubular shaped article as claimed in claim 9, which has subsequently been subjected to the action of a fungicidal solution and/or a release or adhesive preparation.

11. The tubular shaped article as claimed in claim 9 or 10, which is reinforced with a fiber nonwoven, preferably of hemp fibers.

12. The use of a tubular shaped article as claimed in one or more of claims 9 to 11 as a foodstuff casing, preferably as a sausage skin.

## Revendications

1. Procédé pour le traitement de corps façonnés plans ou en forme de tuyau, en cellulose hydratée, **caractérisé en ce qu'**on laisse agir au moins une cellulase sur la surface et qu'on l'inactive ensuite de manière durable.

2. Procédé selon la revendication 1, **caractérisé** en qu'on laisse agir la cellulase à un pH dans la plage de 4,0 à 7,5, de préférence de 4,5 à 7,0.

3. Procédé selon la revendication 1, **caractérisé en ce qu'**on inactive la cellulase par augmentation du pH à plus de 8 et/ou par augmentation de la température à plus de 70 °C.

4. Procédé selon la revendication 1, **caractérisé en ce qu'**on laisse agir la cellulase à une température de 50 à 68 °C, de préférence jusqu'à 60 °C, pendant 20 secondes à 40 minutes, de préférence pendant 2 minutes à 20 minutes.

5. Procédé selon la revendication 1, **caractérisé en ce qu'**on utilise la cellulase sous forme d'une solution aqueuse présentant une proportion de 0,2 à 20 % en poids, de préférence de 0,5 à 5 % en poids, de cellulase par rapport au poids total de la solution.

6. Corps façonnés plans ou en forme de tuyau à base de 'cellulose hydratée, **caractérisé en ce que** sa surface est modifiée par une action limitée dans le temps d'au moins une cellulase.

7. Corps façonné selon la revendication 6, **caractérisé en ce qu'**il est préparé selon le procédé viscose ou aminoxyde, et **en ce qu'**on laisse la cellulase agir pendant que la cellulose est encore à l'état de gel.

8. Corps façonné selon la revendication 6, **caractérisé en ce qu'**il est préparé selon le procédé dviscose ou aminoxyde, et **en ce qu'**on laisse la cellulase agir après régénération et séchage de la cellulose.

9. Corps façonné en forme de tuyau selon la revendication 6, **caractérisé en ce qu'**il est modifié sur la face interne et/ou externe par action de la cellulase.

10. Corps façonné en forme de tuyau selon la revendication 9, **caractérisé en ce qu'**il est ensuite soumis à l'action d'une solution fongicide et/ou d'une préparation de séparation ou adhésive.

11. Corps façonné en forme de tuyau selon la revendication 9 ou 10, **caractérisé en ce qu'**il est renforcé par un non-tissé, de préférence en fibres de chanvre.

12. Utilisation du corps façonné en forme de tuyau selon l'une ou plusieurs des revendications 9 à 11 comme enveloppe pour 'aliment, de préférence comme enveloppe pour saucisson.
